# EUROPEAN PATENT SPECIFICATION

(11) **EP 3 479 719 B1**
(45) Date of publication and mention of the grant of the patent: **31.03.2021**
(21) Application number: 18203244.1
(22) Date of filing: 30.10.2018
(51) Int. Cl.: A44B 11/25

(54) **SEAT-BELT TONGUE**
SICHERHEITSGURTZUNGE
LANGUETTE DE CEINTURE DE SÉCURITÉ

(30) Priority: 01.11.2017 JP 2017211709; 31.07.2018 JP 2018144159
(43) Date of publication of application: 08.05.2019
(73) Proprietor: Joyson Safety Systems Japan K.K., Shinagawa-ku Tokyo 1400002 (JP)
(72) Inventor: INISHI, Hodaka, Shiga, 529-1388 (JP)
(74) Representative: Banzer, Hans-Jörg

(56) References cited:
- EP-A2- 1 273 243
- DE-A1- 4 202 747
- US-A1- 2008 066 271

## Description

### BACKGROUND OF THE INVENTION

The present invention generally relates to a seat-belt tongue for a seat belt apparatus.

Conventionally, there is a need for downsizing a tongue for a seat belt apparatus. For example, the overall length of a tongue can be reduced by making smaller a through hole through which a seat belt is inserted.

When a seat belt is not worn, the seat belt is positioned at the side of a seat and extends downward from a shoulder anchor located above. At this time, a tongue is suspended from the seat belt. If a through hole is small, an inclination angle of the tongue with respect to the seat belt becomes large. As a result, projection of the tongue from the seat belt increases and the tongue may become obstructive when the seat belt is not worn.

In order to solve the above-described problem, US Patent No. 7,761,960 discloses a tongue whose inclination angle with respect to a seat belt is reduced by causing edges forming a through hole to be bent and inclined.

However, in the conventional tongue, strength design is not optimized for external forces from the seat belt that is inserted through the through hole, and an excessive strength design may be applied in part. Accordingly, there are limitations on making the tongue small and lightweight.

A seat-belt tongue according to the preamble of claim 1 is known from EP 1 273 243 A2. Further seat-belt tongues are disclosed in US 2008/066271 A1 and DE 42 02 747 A1.

### SUMMARY OF THE INVENTION

It is a general object of the invention to provide a seat-belt tongue that can be downsized.

According to the invention, this object is achieved by a seat-belt tongue as defined in claim 1. The dependent claims define preferred and/or advantageous embodiments of the invention.

The seat-belt tongue preferably may be used in a seat belt apparatus installed in a vehicle.

Other objects and further features of the present invention will be apparent from the following detailed description when read in conjunction with the accompanying drawings.

### BRIEF DESCRIPTION OF THE DRAWINGS

FIG. 1 is a drawing illustrating an example of a seat belt apparatus that includes a seat-belt tongue according to an embodiment;
FIG. 2 is a plan view illustrating a front side of the seat-belt tongue of FIG. 1;
FIG. 3 is a plan view illustrating a back side of the seat-belt tongue of FIG. 2;
FIG. 4 is a cross-sectional view of the seat-belt tongue taken through A-A of FIG. 2;
FIG. 5 is a plan view of a front side of a plate of the seat-belt tongue;
FIG. 6 is a plan view of a back side of the plate of the seat-belt tongue;
FIG. 7 is a drawing illustrating cross sections of the plate taken through B-B, C-C, D-D, and E-E of FIG. 5;
FIG. 8 is a drawing schematically illustrating stress and moments applied to elements of the plate when tensile load is applied to the seat-belt tongue from the seat belt inserted through a through hole;
FIG. 9 is a plan view of a front side of a plate of a further seat-belt tongue which does not form part of the claimed invention; and
FIG. 10 is a cross-sectional view of the plate taken through F-F of FIG. 9.

### DESCRIPTION OF THE PREFERRED EMBODIMENTS

In the following, embodiments of the present invention will be described with reference to the accompanying drawings. For convenience of explanation, the same elements are denoted by the same reference numerals in the drawings, and a duplicate description thereof will be omitted.

According to at least one embodiment, it is possible to provide a seat-belt tongue that can be downsized.

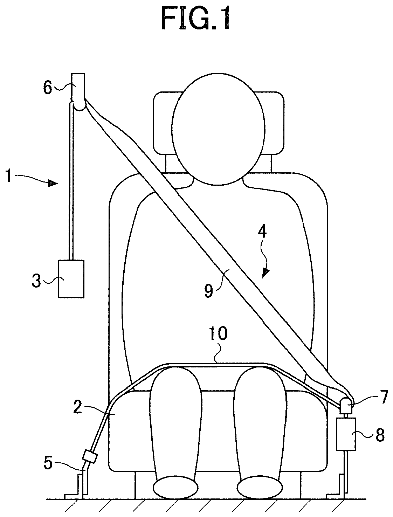

Referring to FIG. 1 through FIG. 8, an embodiment will be described.

FIG. 1 is a drawing illustrating an example of a seat belt apparatus 1 that includes a seat-belt tongue 7 according to the embodiment. The seat belt apparatus 1 includes a seat belt 4, a retractor 3, a shoulder anchor 6, a seat-belt tongue 7, and a buckle 8.

The seat belt 4 is an example of webbing for restraining an occupant sitting on a seat 2 of a vehicle. The seat belt 4 is a band-shaped member that can be retracted into and extended from the retractor 3. A belt anchor 5 located at the end of the seat belt 4 is fixed to the vehicle floor or to the seat 2.

The retractor 3 is an example of a winding device that allows the seat belt 4 to be retracted and extended. When the vehicle undergoes deceleration greater than or equal to a predetermined value due to an accident such as a vehicle collision, the retractor 3 restricts the seat belt 4 from being pulled out of the retractor 3. The retractor 3 is fixed to the seat 2 or to the vehicle body near the seat 2.

The shoulder anchor 6 is an example of a seat belt insertion member through which the seat belt 4 is inserted. The shoulder anchor 6 serves to guide the seat belt 4 toward the shoulder of the occupant when the seat belt 4 is pulled out of the retractor 3.

The seat-belt tongue 7 is an example of a seat-belt insertion member through which the seat belt 4 is inserted. The seat-belt tongue 7 is slidably attached to the seat belt 4 that is guided by the shoulder anchor 6.

The buckle 8 is an example of a member with which the seat-belt tongue 7 is removably engaged. The buckle 8 is fixed to the vehicle floor or to the seat 2.

A shoulder belt 9 is a part of the seat belt 4 located between the shoulder anchor 6 and the seat-belt tongue 7 when the seat-belt tongue 7 is engaged with the buckle 8. The shoulder belt 9 restrains the chest and the shoulder of the occupant. A lap belt 10 is a part of the seat belt 4 located between the belt anchor 5 and the seat-belt tongue 7 when the seat-belt tongue 7 is engaged with the buckle 8. The lap belt 10 restrains the waist of the occupant.

In a non-wearing state in which the seat belt 4 is not worn by the occupant, the seat-belt tongue 7 is not engaged with the buckle 8 and the seat belt 4 is entirely retracted into the retractor 3 (i.e., to the full extent that the seat belt 4 can be smoothly retracted into the retractor 3). Conversely, in a wearing state in which the seat belt 4 is worn by the occupant, the seat belt 4 is pulled out of the retractor 3 as illustrated in FIG. 1. Also, the seat-belt tongue 7 is engaged with the buckle 8 and the seat belt 4 is pulled back into the retractor 3 such that slackness of the seat belt 4 becomes small. In this way, the seat belt 4 is worn by the occupant.

When the vehicle does not undergo deceleration greater than or equal to the predetermined value due to a vehicle collision in a state in which the seat-belt tongue 7 is engaged with the buckle 8 and the seat belt 4 is worn by the occupant, the seat belt 4 can be freely pulled out of the retractor 3 at a normal pulling-out speed. Once pulling force in a pulling direction of the seat belt 4 is released, the excessive length of the seat belt 4 is pulled back into the retractor 3.

When the vehicle undergoes deceleration greater than or equal to the predetermined value due to an emergency situation such as a vehicle collision in a state in which the seat-belt tongue 7 is engaged with the buckle 8 and the seat belt 4 is worn by the occupant, the retractor 3 locks or retracts the seat belt 4 so as to restrict the seat belt 4 from being pulled out of the retractor 3. Accordingly, the seat belt 4 can securely restrain the occupant.

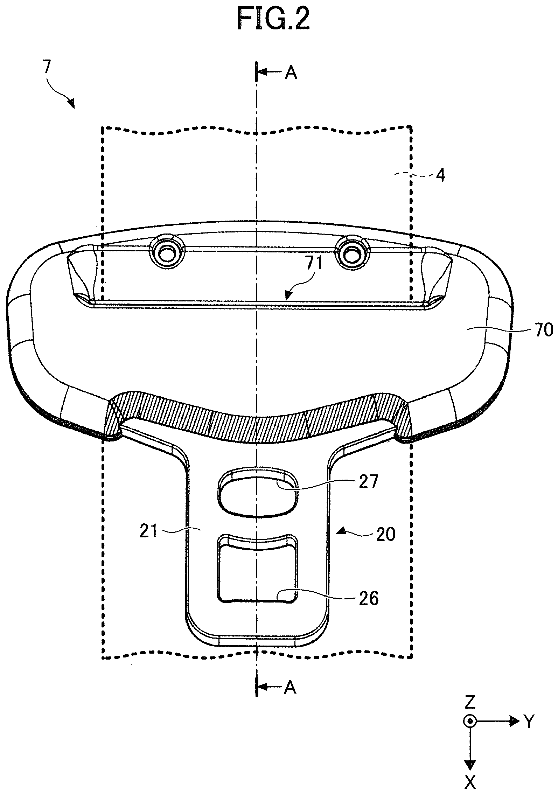

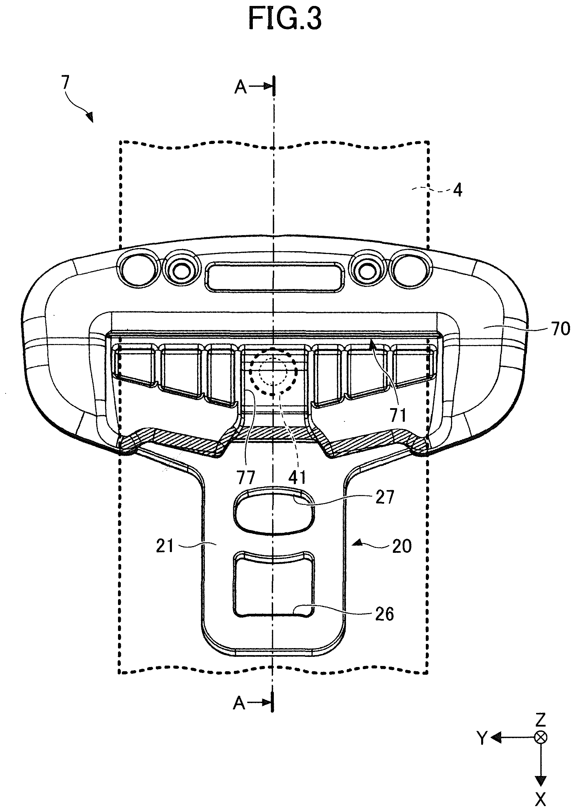

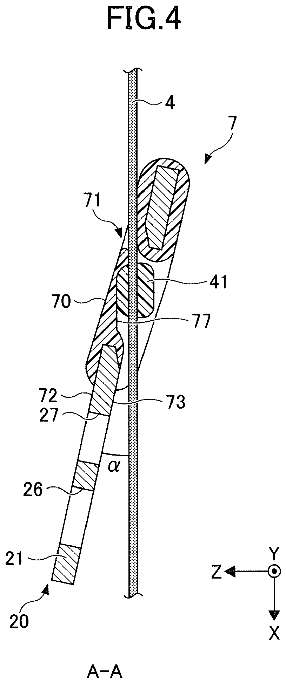

Referring to FIG. 2 through FIG. 4, a configuration of the seat-belt tongue 7 according to the embodiment will be described. FIG. 2 is a plan view illustrating a front side of the seat-belt tongue 7 of FIG. 1. FIG. 3 is a plan view illustrating a back side of the seat-belt tongue 7 of FIG. 2. FIG. 4 is a cross-sectional view of the seat-belt tongue 7 taken through A-A of FIG. 2.

In FIG. 2 and the subsequent figures, an x-direction, a y-direction, and a z-direction are perpendicular to each other. The x-direction is an extending direction of a longitudinal portion 21 and is also an inserting and removing direction of the seat-belt tongue 7 into and from the buckle 8. The y-direction is an extending direction of a broader portion 22 of a plate 20. The z-direction is a direction in which a pair of main surfaces 72 and 73 are opposite to each other and is also a direction perpendicular to the main surfaces 72 and 73.

As illustrated in FIG. 2 through FIG. 4, the seat-belt tongue 7 has a through hole 71 through which the seat belt 4 is inserted. Also, the seat-belt tongue 7 includes the plate 20 made of metal. A part of the plate 20 is covered by a mold 70 formed of a resin, for example.

As illustrated in FIG. 3 and FIG. 4, the seat belt 4 is provided with a tongue stopper 41 that projects from a main surface of the seat belt 4. The seat-belt tongue 7 is provided with a stopper receiver 77 that is inwardly recessed from a back surface of the mold 70. In the non-wearing state in which the seat belt 4 is not worn by the occupant, the tongue stopper 41 is caught in the stopper receiver 77. By allowing the stopper receiver 77 to receive the tongue stopper 41, movement of the seat-belt tongue 7 in a positive x-direction can be restricted.

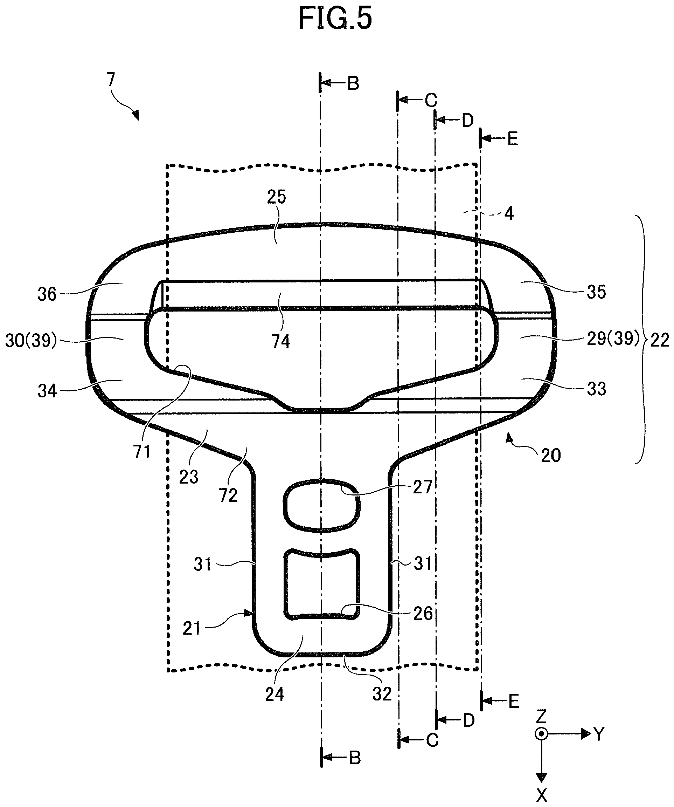

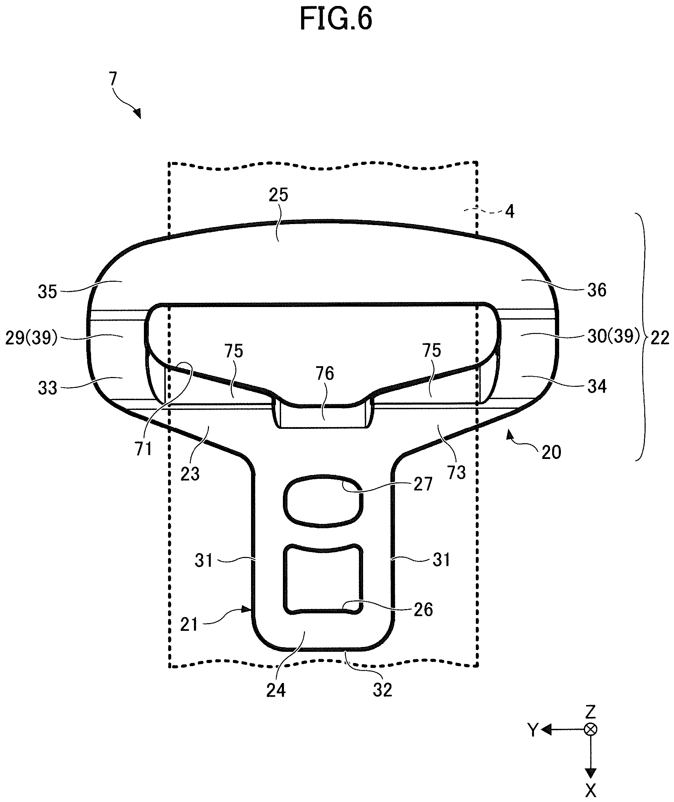

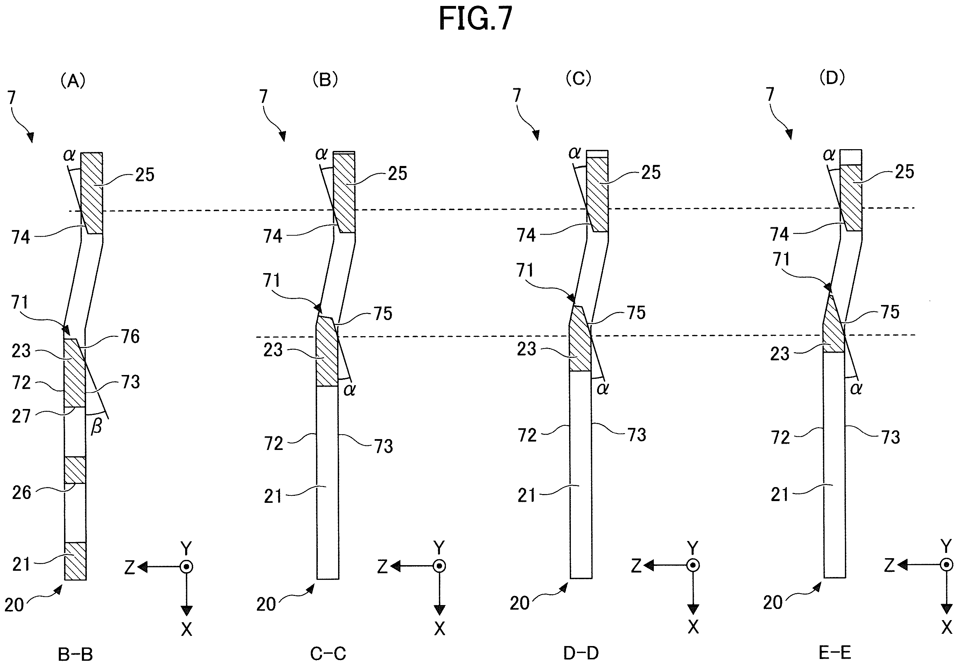

Referring to FIG. 5 through FIG. 7, a configuration of the plate 20 of the seat-belt tongue 7 will be described. FIG. 5 is a plan view of a front side of the plate 20 of the seat-belt tongue 7. FIG. 6 is a plan view of a back side of the plate 20 of the seat-belt tongue 7. FIG. 7 is a drawing illustrating cross sections of the plate 20 taken through B-B, C-C, D-D, and E-E of FIG. 5. As illustrated in FIG. 5 through FIG. 7, the plate 20 includes the longitudinal portion 21 that can be inserted into the buckle 8 and the broader portion 22 that is formed wider than the longitudinal portion 21. The plate 20 is a planar plate-shaped member formed in a substantially T-shape. By inserting the longitudinal portion 21 into the buckle 8, the seat-belt tongue 7 is coupled to the buckle 8 via the plate 20.

The plate 20 is formed by stamping from a single metal plate containing carbon steel as a main component. The plate 20 is the plate-shaped member having the pair of main surfaces 72 and 73.

The longitudinal portion 21 is a planar plate portion that can be engaged with the buckle 8. The longitudinal portion 21 extends from the broader portion 22 to a tip end 24 in the positive x-direction. The x-direction corresponds to a longitudinal direction of the longitudinal portion 21. The longitudinal portion 21 has a pair of long sides 31 and one short side 32. The pair of long sides 31 is an outer edge extending from the broader portion 22 in the positive x-direction. The short side 32 is an outer edge extending in a short-length direction of the longitudinal portion 21 (the y-direction) and is also an outer edge of the tip end 24 in the x-direction. The y-direction corresponds to a width direction of the longitudinal portion 21.

The longitudinal portion 21 has a latch hole 26 between the tip end 24 and the broader portion 22. The latch hole 26 is engaged with a latch member of the buckle 8. The longitudinal portion 21 may have a lightening hole 27 between the tip end 24 and the broader portion 22. The lightening hole 27 is for making the plate 20 lightweight.

The broader portion 22 is a plate portion located on the opposite side of the tip end 24 of the longitudinal portion 21 in the x-direction. A long-side direction of the broader portion 22 corresponds to the y-direction. The broader portion 22 has a base 23, a beam 25, and a connecting portion 39.

The base 23 is connected to a root end on the opposite side of the tip end 24 of the longitudinal portion 21 in the x-direction. The base 23 is a planar plate that is formed wider than the longitudinal portion 21. A long-side direction of the base 23 corresponds to the y-direction. The base 23 has a first side end 33 and a second side end 34. The first side end 33 is one side end in the y-direction and the second side end 34 is the other side end on the opposite side of the first side end 33 in the y-direction.

The beam 25 is a planar plate portion extending in the longitudinal direction of the broader portion 22 (namely, in the y-direction). A long-side direction of the beam 25 corresponds to the y-direction. The beam 25 has a first beam end 35 and a second beam end 36. The first beam end 35 is one beam end in the y-direction and the second beam end 36 is the other beam end on the opposite side of the first beam end 35 in the y-direction.

The connecting portion 39 is a planar plate portion that connects the base 23 and the beam 25 at both ends in the y-direction. The connecting portion 39 has a first arm 29 and a second arm 30. The first arm 29 is a connecting portion that connects the first side end 33 and the first beam end 35. The second arm 30 is a connecting portion that connects the second side end 34 and the second beam end 36.

In the plate 20, the through hole 71 is formed by the base 23, the beam 25, and the connecting portion 39 of the broader portion 22. To be more specific, the through hole 71 is formed by continuously connecting an edge on a negative x-side of the base 23, an edge on a positive x-side of the beam 25, an edge on a negative y-side of the first arm 29 of the connecting portion 39, and an edge on a positive y-side of the second arm 30 of the connecting portion 39. The through hole 71 is formed such that the y-direction is the longer axis and the x-direction is the shorter axis. Further, the negative x-side of the through hole 71 is formed in parallel with the y-direction. Conversely, the positive x-side of the through hole 71 is formed such that the through hole 71 in the width direction (the y-direction) is widest at the center, where the edge is furthest in the positive x-direction, and is formed to be inclined toward both ends.

In the present embodiment, the seat belt 4 is inserted through the through hole 71 such that the part of the seat belt 4 extending to the shoulder anchor 6 faces the one main surface 72, and the part of the seat belt 4 extending to the belt anchor 5 faces the other main surface 73 of the plate 20.

As described, when the occupant does not wear the seat belt, the seat belt 4 is positioned at the side of the seat and extends downward from the shoulder anchor 6 located above. In the example of FIG. 1, the seat belt 4 is positioned at the left side (of the figure) of the seat 2 and extends linearly in the top-bottom direction between the shoulder anchor 6 and the belt anchor 5 located vertically downward. At this time, the seat-belt tongue 7 is suspended from the seat belt 4 between the shoulder anchor 6 and the belt anchor 5 while being inclined. Namely, as illustrated in FIG. 2 through FIG. 4, when the seat belt 4 is not worn, the part of the seat belt 4 facing the one main surface 72 of the plate 20 extends upward from the through hole 71 to the shoulder anchor 6, and the part of the seat belt 4 facing the other main surface 73 extends downward from the through hole 71 to the belt anchor 5.

In the embodiment, in light of the above-described positional relationship between the seat-belt tongue 7 and the seat belt 4 in a non-wearing state in which the seat belt 4 inserted through the through hole 71 is not worn, as illustrated in FIG. 5 and FIG. 7, the edge on the positive x-side of the beam 25, which forms the through hole 71 and faces the part of the seat belt 4 extending upward from the through hole 71 to the shoulder anchor 6, is subjected to a beveling press. To be more specific, the edge on the positive x-side of the beam 25 has an inclined surface 74 on the main surface 72 side. The inclined surface 74 is inclined in the negative z-direction relative to the positive x-direction. At the edge forming the through hole 71 and located on the positive x-side of the beam 25, the inclined surface 74 is formed over the entire width in the y-direction. The length of the inclined surface 74 in the x-direction is constant over the entire width in the y-direction. Further, on the main surface 73 on the opposite side of the main surface 72 having the inclined surface 74, the edge on the positive x-side of the beam 25 does not protrude in the negative z-direction and is flat along the main surface 73.

As described, by providing the inclined surface 74 on the beam 25 of the plate 20, a contact position between the beam 25 and the seat belt 4 can be moved to the negative z-side. Accordingly, an inclination angle α of the seat-belt tongue 7 with respect to the seat belt 4 when the seat belt 4 is not worn can be reduced.

Further, as illustrated in FIG. 6 and FIG. 7, in the non-wearing state in which the seat belt 4 is not worn by the occupant, the edge on the negative x-side of the base 23, which forms the through hole 71 and faces the part of the seat belt 4 extending from the through hole 71 downward to the belt anchor 5, is subjected to a beveling press. To be more specific, the edge on the negative x-side of the base 23 has an inclined surface 75 on the main surface 73 side. The inclined surface 75 is inclined in the positive z-direction relative to the negative x-direction. As illustrated in FIG. 6, at the edge of the beam 25 forming the through hole 71, the inclined surface 75 is formed over the entire width in the y-direction (the center at which an inclined surface 76 for the receiver is formed, which will be described later, is excluded).

As indicated by a dotted-line connecting the cross sections (B) through (D) of FIG. 7, an edge on the positive x-side of the inclined surface 75 is at the same level. Conversely, as described above, the edge on the positive x-side of the through hole 71 is inclined from the center toward the both ends in the y-direction. Thus, the length of the inclined surface 75 in the x-direction increases from the center to the ends. Further, on the main surface 72 on the opposite side of the main surface 73 having the inclined surface 75, the edge on the negative x-side of the base 23 does not protrude in the positive z-direction and is flat along the main surface 72.

As described, in the embodiment, by providing the inclined surface 75 on the base 23 of the plate 20, a contact position between the base 23 and the seat belt 4 can be moved to the positive z-side. Accordingly, the inclination angle α of the seat-belt tongue 7 with respect to the seat belt 4 when the seat belt 4 is not worn can be further reduced. Note that the inclination angle α of the seat-belt tongue 7 can be represented as an inclination angle of the inclined surfaces 74 and 75.

Further, as illustrated in FIG. 7, the beam 25 of the plate 20 is offset with respect to the base 23 towards the opposite side of the edge of the beam 25 that has been subjected to a beveling press (namely, in the negative z-direction), among directions perpendicular to the extending direction of the longitudinal portion 21 and to the extending direction of the broader portion 22.

As described, by providing the beam 25 that is offset with respect to the base 23 of the plate 20, the contact position between the beam 25 and the seat belt 4 can be further moved to the negative z-side. Accordingly, the inclination angle α of the seat-belt tongue 7 with respect to the seat belt 4 when the seat belt 4 is not worn can be further reduced.

In particular, in the embodiment, the beam 25 and the base 23 of the plate 20 are formed such that a cross-sectional area of each of the beam 25 and the base 23 when viewed in the long-side direction of the broader portion 22 becomes smaller at the both ends than at the center. To be more specific, as illustrated in FIG. 7, a width of the beam 25 in the inserting and removing direction of the longitudinal portion 21 into and from the buckle 8 (namely, in the x-direction) becomes smaller at the both ends than at the center. Further, the beam 25 is formed such that a length of the inclined surface 74 in the x-direction becomes constant. As illustrated in the cross sections (b) through (D) of FIG. 7, the base 23 is formed such that a length of the inclined surface 75 in the inserting and removing direction of the longitudinal portion 21 into and from the buckle 8 becomes larger at the both ends than at the center. Also, a width of the base 23 in the x-direction is formed so as to be constant. Namely, the beam 25 and the base 23 have different parameters for changing the cross-sectional areas. To be more specific, the cross-sectional area of the beam 25 is changed by changing the width of the beam 25 in the x-direction and the cross-sectional area of the base 23 is changed by changing the length of the inclined surface in the x-direction.

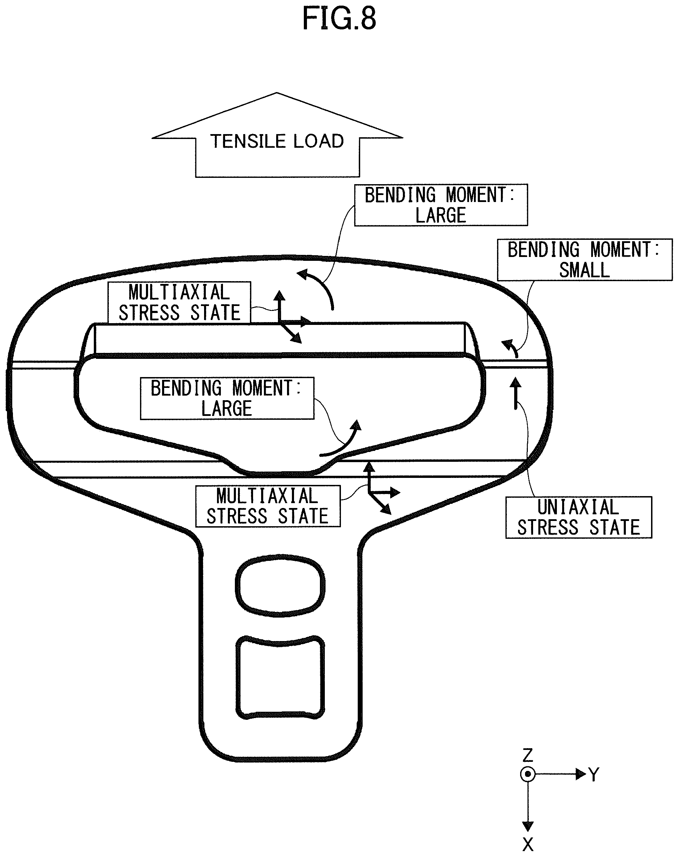

Referring to FIG. 8, an effect of changing the cross-sectional areas of the beam 25 and the base 23 will be described. FIG. 8 is a drawing schematically illustrating stress and moments applied to the elements of the plate 20 when tensile load is applied to the seat-belt tongue 7 from the seat belt 4 inserted through the through hole 71.

As illustrated in FIG. 8, the vicinity of the center of the beam 25 is under a multiaxial stress state; thus, the possibility of originating a rupture or yielding would be high. In order to prevent any such rupture or yielding, a large cross-sectional area is required. Further, because a large bending moment is applied to the vicinity of the center of the beam 25, the possibility of originating a large deflection or bending deformation would be high. Thus, the seat belt 4 would be damaged or stress applied to other elements of the plate 20 would increase. In order to prevent any such large deflection or bending deformation, the cross-sectional area of the second moment of area is required to be increased. The second moment of area is calculated by the formula "(thickness) × (height)³) / 12). Because the formula includes the cube of the height, making the width in the x-direction larger is effective in increasing the second moment of area. In the beam 25, the length of the inclined surface 74 in the x-direction is constant. Thus, by increasing the width of the beam 25 in the x-direction, the cross-sectional area of the beam 25 can be made larger. Thus, it is preferable to make larger the cross-sectional area and the second moment of area by increasing the width of the center of the beam 25 in the x-direction so as to increase resistance to stress and bending moments.

Conversely, the beam 25 becomes closer to a uniaxial stress state and a bending moment becomes smaller from the center towards the ends of the beam 25. Thus, the closer to the ends of the beam 25, the lower the possibility of a rupture or bending deformation being originated. Accordingly, the cross-sectional area and the second moment of area of the beam 25 can be made smaller than the center by making the width in the x-direction smaller.

The vicinity of the center of the base 23 is under a multiaxial stress state and is also subjected to a large bending moment. Thus, it is preferable to make larger the cross-sectional area of the base 23 by increasing the length of the center of the inclined surface 75 in the x-direction so as to increase resistance to stress. Conversely, the base 23 becomes closer to a uniaxial stress state and a bending moment becomes smaller from the center towards the ends of the base 23. Accordingly, the cross-sectional area of the base 23 can be made smaller than the center by making the length of the inclined surface 75 in the x-direction larger.

As described, the cross-sections of the beam 25 and the base 23 are each formed such that the both ends become smaller than at the center. Accordingly, while increasing resistance at the center that is under a multiaxial stress state and is subjected to a large bending moment, it is also possible to decrease the extent of stress at the both ends, which require less resistance than at the center. Therefore, an appropriate strength design can be applied to the plate 20 along the width direction (y-direction). By eliminating an excessive strength design at parts where applicable, the downsizing of the seat-belt tongue 7 can be facilitated.

In the embodiment, as the parameter for changing the cross-sectional area of the base 23, only the length of the inclined surface 75 in the x-direction is used; however, the width of the base 23 in the x-direction may also be used. Accordingly, by making the width of the center of the base 23 in the x-direction larger, the second moment of area can be increased and resistance to a bending moment can also be increased.

Also, in the embodiment, as illustrated in FIG. 3 and FIG. 4, the stopper receiver 77 is provided so as to be inwardly recessed from the surface of a portion of the mold 70 that covers the plate 20. The base 23 is embedded in this portion. As illustrated in FIG. 6 and the cross section (A) of FIG. 7, in the base 23 of the plate 20, the edge forming the through hole 71 has the inclined surface 76 for the stopper receiver 77 at its center, which coincides with the stopper receiver 77. The inclined surface 76 faces the stopper receiver 77 and is formed by being subjected to a beveling press or chamfering. As illustrated in the cross section (A) of FIG. 7, which is on the main surface 72 on the opposite side of the main surface 73 having the inclined surface 76 for the stopper receiver 77, the edge on the negative x-axis side of the base 23 does not protrude from the main surface 72 and is flat along the main surface 72.

By providing the inclined surface 76 for the stopper receiver 77 at the center of the base 23 of the plate 20, which coincides with the stopper receiver 77, the stopper receiver 77 can be formed deeper from the surface of the mold 70 without being obstructed by the plate 20. Accordingly, as illustrated in FIG. 4, the tongue stopper 41 can be inserted deep into the stopper receiver 77. Thus, the inclination angle α of the seat-belt tongue 7 with respect to the seat belt 4 can be further decreased.

As illustrated in FIG. 7, an inclination angle β is preferably larger than the inclination angle α of the inclined surfaces 74 and 75. Also, as illustrated in FIG. 5 and FIG. 6, the center of the base 23 that has the inclined surface 76 for the stopper receiver 77 is preferably formed so as to be recessed in a direction in which the through hole 71 is widened. Accordingly, a larger space where the plate 20 is not present can be provided at the center of the base 23 of the plate 20, which coincides with the stopper receiver 77. As a result, the stopper receiver 77 can be formed even deeper from the surface of the mold 70 and the tongue stopper 41 can be inserted even deeper into the stopper receiver 77, allowing the inclination angle α of the seat-belt tongue 7 with respect to the seat belt 4 to be further decreased.

In the embodiment, as approaches for forming the stopper receiver 77 deeper from the surface, the inclined surface 76 for the stopper receiver 77 may be formed on the base 23 of the plate 20, and the center of the base 23 may be recessed toward the longitudinal portion 21. Of these approaches, providing the inclined surface 76 for the stopper receiver 77 is preferred. This is because even when the inclined surface 76 for the stopper receiver 77 is provided, the width of the center in the x-direction does not decrease. Thus, the second moment of area is not reduced and resistance to a bending moment can be maintained. Even if the center of the base 23 is not recessed toward the longitudinal portion 21, the stopper receiver 77 can be formed deeper from the surface of the mold 70 by making the inclination angle β of the inclined surface 76 for the stopper receiver 77 larger than the inclination angle α.

In the embodiment, the beam 25 and the base 23 of the plate 20 are formed such that the cross-sectional area of each of the beam 25 and the base 23 when viewed in the long-side direction of the broader portion 22 becomes smaller at the both ends than at the center. However, only one of the beam 25 and the base 23 may be formed such that the cross-sectional area of one of the beam 25 and the base 23 becomes smaller at the both ends than the center. In this case, it is preferable to make smaller the cross-sectional area of the beam 25 at the both ends than the center because the beam 25 is more subject to tensile load from the seat belt 4 that has been inserted through the through hole 71.

In the embodiment, as specific approaches for making smaller the cross-sectional area at the both ends than the cross-sectional area of the center, a first approach is applied to the beam 25 and a second approach is applied to the base 23. In the first approach, the width of the beam 25 in the inserting and removing direction of the longitudinal portion 21 into and from the buckle 8 is made smaller at the both ends than at the center. In the second approach, the length of the inclined surface 75 in the inserting and removing direction of the longitudinal portion 21 into and from the buckle 8 is made larger at the both ends than at the center. However, the present invention is not limited to these approaches. For example, the second approach may be applied to the beam 25, and the first approach may be applied to the base 23. Alternatively, a combination of the first approach and the second approach may be applied to the beam 25 or the base 23. Further, an approach other than the first and the second approaches may be used to change the cross-sectional area.

In the embodiment, the inclined surface 74 on the beam 25 and the inclined surface 75 on the base 23 of the plate 20 of the seat-belt tongue 7 are formed by being subjected to a beveling press. However, the inclined surface 74 and the inclined surface 75 may be formed by being subjected to chamfering. Also, in the embodiment, the inclined surfaces 74 and 75 are formed in a planar shape; however, the inclined surfaces 74 and 75 may be formed in other shapes such as a curved shape.

In the embodiment, the inclination angle of the inclined surfaces 74 and 75 is the same as the inclination angle α of the seat-belt tongue 7 with respect to the seat belt 4. However, the inclination angle of the inclined surfaces 74 and 75 may be an angle other than the angle α, or the inclined surfaces 74 and 75 may have different inclination angles.

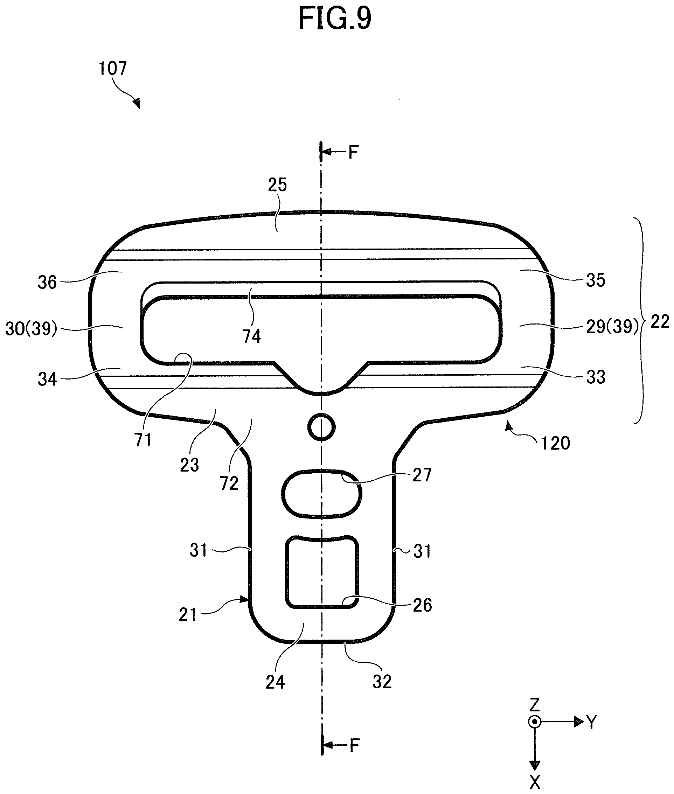

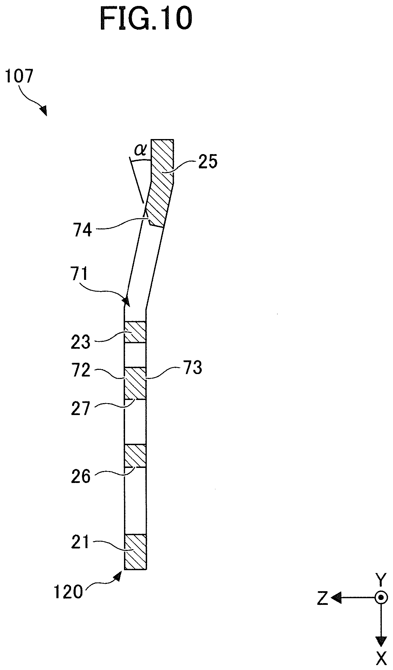

Referring to FIG. 9 and FIG. 10, a further seat-belt tongue will be described, which does not form part of the claimed invention. FIG. 9 is a plan view of a front side of a plate 120 of this seat-belt tongue 107. FIG. 10 is a cross-sectional view of the plate 120 taken through F-F of FIG. 9.

As illustrated in FIG. 10, this seat-belt tongue differs from the embodiment in that the edge of the base 23 forming the through hole 71 does not have the inclined surface 75, and only the beam 25 has the inclined surface 74. In such a configuration without the base 23 having an inclined surface, similarly to the beam 25, as illustrated in FIG. 9, the width of the base 23 in the inserting and removing direction of the longitudinal portion 21 into and from the buckle 8 is formed smaller at the both ends than at the center, such that the cross-sectional area of the base 23 becomes smaller at the both ends than at the center.

In this way, even in the configuration in which the beam 25 of the plate 120 of the seat-belt tongue 107 has the inclined surface 74 and the base 23 does not have an inclined surface, the beam 25 and the base 23 of the plate 120 can be formed such that the cross-sectional area of each of the beam 25 and the base 23 becomes smaller at the both ends than at the center. Accordingly, similarly to the embodiment, an effect of facilitating the downsizing of the seat-belt tongue 107 can be exhibited.

As illustrated in FIG. 10, in this seat-belt tongue, the beam 25 is subjected to a bending process at its substantially middle position in the x-direction. Accordingly, resistance of the beam 25 to a bending moment can be further increased.

Contrary to FIG. 10, the seat-belt tongue 107 may have a configuration in which the base 23 of the plate 120 has the inclined surface 75 and the beam 25 does not have an inclined surface.

Although the embodiments have been specifically described above, the present disclosure is not limited to the above-described embodiments. These specific embodiments may be modified by a person skilled in the art as long as the features of the present disclosure are included. Elements and their arrangement, conditions, and shapes are not limited to the above-described embodiments and may be modified as necessary. It should be noted that combination of the elements of the above-described embodiments may be changed as long as no technical contradiction occurs with the invention as defined by the claims.

## Claims

1. A seat-belt tongue (7; 107) comprising:
a plate (20) having a longitudinal portion (21) that is insertable into a buckle (8), and a broader portion (22) that is located on an opposite side of a tip end (24) of the longitudinal portion (21) and is formed wider than the longitudinal portion (21), the broader portion (22) being covered at least in part,
wherein the broader portion (22) has a base (23) that is connected to the longitudinal portion (21), a beam (25) that extends in a long-side direction of the broader portion (22), a connecting portion (39) that connects the base (23) and the beam (25) at each end in the long-side direction, and a through hole (71) that is formed by the base (23), the beam (25), and the connecting portion (39) and through which a seat belt (4) is to be inserted, and
wherein the beam (25) or the base (23) is formed such that a cross-sectional area of the beam (25) or the base (23) when viewed in the long-side direction becomes smaller at both ends than at a center in the long-side direction and has an edge forming the through hole (71),
**characterized in that**
the edge has an inclined surface (74, 75) that faces the seat belt (4) in a non-wearing state in which the seat belt (4) inserted through the through hole (71) is not worn by an occupant,
the inclined surface (74, 75) is formed by being subjected to a beveling press or chamfering, and
a length of the inclined surface (74, 75) in an inserting and removing direction of the longitudinal portion (21) into and from the buckle (8) is formed larger at the both ends than at the center.

2. The seat-belt tongue (7; 107) according to claim 1, wherein the beam (25) or the base (23) formed such that the cross-sectional area of the beam (25) or the base (23) becomes smaller at the both ends than at the center is formed such that a width of the beam (25) or the base (23) in an inserting and removing direction of the longitudinal portion (21) into and from the buckle (8) becomes smaller at said both ends than at the center.

3. The seat-belt tongue (7; 107) according to claim 1 or claim 2, wherein:
the beam (25) and the base (23) are formed such that the cross-sectional area of each of the beam (25) and the base (23) becomes smaller at the both ends than at the center,
the beam (25) and the base (23) have edges forming the through hole (71),
the edges each have an inclined surface (74, 75) that faces the seat belt (4) in a non-wearing state in which the seat belt (4) inserted through the through hole (71) is not worn by an occupant,
the inclined surface (74, 75) is formed by being subjected to a beveling press or chamfering, and
the beam (25) is formed such that a width of the beam (25) in an inserting and removing direction of the longitudinal portion (21) into and from the buckle (8) becomes smaller at the both ends than at the center, and
the base (23) is formed such that a length of the inclined surface (75) in the inserting and removing direction of the longitudinal portion (21) into and from the buckle (8) becomes larger at the both ends than at the center.

4. The seat-belt tongue (7; 107) according to any one of claims 1 to 3, comprising:
a stopper receiver (77) configured to receive a tongue stopper (41) that is provided so as to project from a main surface of the seat belt (4) such that the seat-belt tongue (7) is restricted from moving along the seat belt (4) in a non-wearing state in which the seat belt (4) is not worn by an occupant,
wherein the stopper receiver (77) is provided so as to be inwardly recessed from a surface of a portion of a mold (70) that covers the plate (20), the base (23) being embedded in the portion,
wherein the plate (20) has a given inclined surface (76) that faces the stopper receiver (77) at a center of an edge of the base (23), the edge forming the through hole (71) and the center coinciding with the stopper receiver (77), and
wherein the given inclined surface (76) is formed by being subjected to a beveling press or chamfering.

5. The seat-belt tongue (7; 107) according to claim 4, wherein:
the beam (25) or the base (23) has, at an edge forming the through hole (71), an inclined surface (74, 75) that faces the seat belt (4) in a non-wearing state in which the seat belt (4) inserted through the through hole (71) is not worn by an occupant, and
an inclination angle of the given inclined surface (76) of the plate (20) is larger than an inclination angle of the inclined surface (74, 75) of the beam (25) or the base (23).

6. The seat-belt tongue (7; 107) according to claim 4 or claim 5, wherein the center of the base (23) having the given inclined surface (76) is recessed in a direction in which the through hole (71) is widened.

7. A seat belt apparatus (1) comprising:
a seat belt (4),
a retractor (3) which is configured to allow the seat belt (4) to be retracted into and extended from the retractor (3),
a seat-belt insertion member (6) through which the seat-belt (4) is inserted and which is configured to guide the seat belt (4) towards an occupant,
a buckle (8), and
a seat-belt tongue (7; 107) to be removably engaged with the buckle (8), wherein the seat-belt tongue (7; 107) is the seat-belt tongue according to any one of claims 1-6.

8. A vehicle comprising the seat belt apparatus (1) of claim 7.

## Patentansprüche

1. Sitzgurtzunge (7; 107) umfassend:
eine Platte (20), welche einen Längsabschnitt (21), welcher in ein Gurtschloss (8) einführbar ist, und einen breiteren Abschnitt (22), welcher auf einer gegenüberliegenden Seite eines äußeren Endes (24) des Längsabschnitt (21) angeordnet ist und breiter als der Längsabschnitt (21) ausgebildet ist, aufweist, wobei der breitere Abschnitt (22) zumindest teilweise abgedeckt ist,
wobei der breitere Abschnitt (22) eine Basis (23), welche mit dem Längsabschnitt (21) verbunden ist, einen Träger (25), welcher sich in einer Längsrichtung des breiteren Abschnitts (22) erstreckt, einen Verbindungsabschnitt (39), welcher die Basis (23) und den Träger (25) an jedem Ende in der Längsrichtung verbindet, und ein Durchgangsloch (71), welches durch die Basis (23), den Träger (25) und den Verbindungsabschnitt (39) ausgebildet ist und durch welches ein Sitzgurt (4) einzuführen ist, aufweist, und
wobei der Träger (25) oder die Basis (23) ausgebildet ist, so dass ein Querschnittsbereich des Trägers (25) oder der Basis (23), wenn er in der Längsrichtung betrachtet wird, an beiden Enden kleiner ist als eine Mitte in der Längsrichtung und einen Rand aufweist, welcher das Durchgangsloch (71) ausbildet,
**dadurch gekennzeichnet,**
**dass** der Rand eine geneigte Fläche (74, 75) aufweist, welche dem Sitzgurt (4) in einem nicht getragenen Zustand, in welchem der Sitzgurt (4), welcher durch das Durchgangsloch (71) eingeführt ist, nicht durch einen Insassen getragen wird, gegenüberliegt,
**dass** die geneigte Fläche (74, 75) ausgebildet ist, indem sie einem abgeschrägten Druck oder einem Anfasen unterzogen ist, und
**dass** eine Länge der geneigten Fläche (74, 75) in einer Einführungs- und Entnahme-Richtung des Längsabschnitts (21) in und aus der Schnalle (8) an den beiden Enden größer als an der Mitte ausgebildet ist.

2. Sitzgurtzunge (7; 107) nach Anspruch 1, wobei der Träger (25) oder die Basis (23), welche(r) ausgebildet ist, so dass der Querschnittsbereich des Trägers (25) oder der Basis (23) an den beiden Enden kleiner ist als an der Mitte, ausgebildet ist, so dass eine Breite des Trägers (25) oder der Basis (23) in einer Einführungs- und Entnahme-Richtung des Längsabschnitts (21) in oder aus der Schnalle (8) an den beiden Enden kleiner ist als an der Mitte.

3. Sitzgurtzunge (7; 107) nach Anspruch 1 oder Anspruch 2,
wobei der Träger (25) und die Basis (23) ausgebildet sind, so dass der Querschnittsbereich jeweils von dem Träger (25) und der Basis (23) an den beiden Enden kleiner ist als an der Mitte,
wobei der Träger (25) und die Basis (23) Ränder aufweisen, welche das Durchgangsloch (71) ausbilden,
wobei die Ränder jeweils eine geneigte Fläche (74, 75) aufweisen, welche dem Sitzgurt (4) in einem nicht getragenen Zustand, in welchem der Sitzgurt (4) durch das Durchgangsloch (71) eingeführt ist, nicht durch einen Insassen getragen wird, gegenüberliegt,
wobei die geneigte Fläche (74, 75) ausgebildet ist, indem sie einem abgeschrägten Druck oder einem Anfasen unterzogen ist, und
wobei der Träger (25) ausgebildet ist, so dass eine Breite des Trägers (25) in einer Einführungs- und Entnahme-Richtung des Längsabschnitts (21) in und aus der Schnalle (8) an den beiden Enden kleiner als an der Mitte ist, und
wobei die Basis (23) ausgebildet ist, so dass eine Länge der geneigten Fläche (25) in der Einführungs- und Entnahme-Richtung des Längsabschnitts (21) in und aus der Schnalle (8) an den beiden Enden größer als an der Mitte ist.

4. Sitzgurtzunge (7; 107) nach einem der Ansprüche 1 bis 3, umfassend:
eine Stopperaufnahme (77), welche ausgestaltet ist, um einen Zungenstopper (41) aufzunehmen, welcher vorhanden ist, um von einer Hauptfläche des Sitzgurts (4) zu ragen, so dass die Sitzgurtzunge (7) bei einer Bewegung entlang des Sitzgurts (4) in einem nicht getragenen Zustand, in welchem der Sitzgurt (4) nicht durch einen Insassen getragen wird, eingeschränkt ist,
wobei die Stopperaufnahme (77) vorhanden ist, um von einer Fläche eines Abschnitts einer Form (70), welche die Platte (70) abdeckt, nach innen vertieft zu sein, wobei die Basis (23) in den Abschnitt eingebettet ist,
wobei die Platte (20) eine vorgegebene geneigte Fläche (76) aufweist, welche der Stopperaufnahme (77) an einer Mitte eines Randes der Basis (23) gegenüberliegt, wobei der Rand das Durchgangsloch (71) ausbildet und die Mitte mit der Stopperaufnahme (77) übereinstimmt, und
wobei die vorgegebene geneigte Fläche (76) ausgebildet ist, indem sie einem abgeschrägten Druck oder einem Anfasen unterzogen ist.

5. Sitzgurtzunge (7; 107) nach Anspruch 4,
wobei der Träger (25) oder die Basis (23) an einem Rand, welcher das Durchgangsloch (71) ausbildet, eine geneigte Fläche (74, 75) aufweist, welche dem Sitzgurt (4) in einem nicht getragenen Zustand, in welchem der Sitzgurt (4), welcher durch das Durchgangsloch (71) eingeführt ist, nicht durch einen Insassen getragen wird, gegenüberliegt, und
wobei ein Neigungswinkel der vorgegebenen geneigten Fläche (76) der Platte (20) größer als ein Neigungswinkel der geneigten Fläche (74, 75) des Trägers (25) oder der Basis (23) ist.

6. Sitzgurtzunge (7; 107) nach Anspruch 4 oder Anspruch 5, wobei die Mitte der Basis (23) mit der vorgegebenen geneigten Fläche (76) in einer Richtung vertieft ist, in welcher sich das Durchgangsloch aufweitet.

7. Sitzgurtvorrichtung (1) umfassend:
einen Sitzgurt (4),
eine Aufrollvorrichtung (3), welche ausgestaltet ist, um zu ermöglichen, dass der Sitzgurt (4) in die Aufrollvorrichtung (3) aufgewickelt und von dieser abgewickelt wird,
ein Sitzgurt-Einführungselement (6), durch welches der Sitzgurt (4) eingeführt ist und welches ausgestaltet ist, um den Sitzgurt (4) zu einem Insassen zu führen,
eine Schnalle (8), und
eine Sitzgurtzunge (7; 107), um sich entfernbar mit der Schnalle (8) in Eingriff zu befinden, wobei die Sitzgurtzunge (7; 107) die Sitzgurtzunge nach einem der Ansprüche 1-6 ist.

8. Fahrzeug, welches die Sitzgurtvorrichtung (1) nach Anspruch 7 umfasst.

## Revendications

1. Languette de ceinture de sécurité (7 ; 107) comprenant :
une plaque (20) ayant une partie longitudinale (21) qui peut être insérée dans une boucle (8), et une partie plus large (22) qui est située sur un côté opposé d'une extrémité de pointe (24) de la partie longitudinale (21) et est formée plus large que la partie longitudinale (21), la partie plus large (22) étant recouverte au moins en partie,
dans laquelle la partie plus large (22) présente une base (23) qui est reliée à la partie longitudinale (21), une poutre (25) qui s'étend dans une direction du côté long de la partie plus large (22), une partie de connexion (39) qui relie la base (23) et la poutre (25) à chaque extrémité dans la direction du côté long, et un trou traversant (71) qui est formé par la base (23), la poutre (25) et la partie de connexion (39) et à travers laquelle une ceinture de sécurité (4) doit être inséré, et
dans laquelle la poutre (25) ou la base (23) est formée de telle sorte qu'une surface de section transversale de la poutre (25) ou de la base (23) lorsqu'elle est vue dans la direction du côté long devient plus petite aux deux extrémités qu'au centre dans la direction du côté long et présente un bord formant le trou traversant (71),
**caractérisée en ce que**
le bord présente une surface inclinée (74, 75) qui fait face à la ceinture de sécurité (4) dans un état où elle n'est pas portée dans lequel la ceinture de sécurité (4) insérée à travers le trou traversant (71) n'est pas portée par un occupant,
la surface inclinée (74, 75) est formée en étant soumise à une presse à chanfreiner ou à un chanfreinage, et
une longueur de la surface inclinée (74, 75) dans une direction d'insertion et de retrait de la partie longitudinale (21) dans et depuis la boucle (8) est formée plus large aux deux extrémités qu'au centre.

2. Languette de ceinture de sécurité (7 ; 107) selon la revendication 1, dans laquelle la poutre (25) ou la base (23) formée de telle sorte que la section transversale de la poutre (25) ou de la base (23) devient plus petite aux deux extrémités qu'au centre est formée de telle sorte qu'une largeur de la poutre (25) ou de la base (23) dans une direction d'insertion et de retrait de la partie longitudinale (21) dans et depuis la boucle (8) devient plus petite auxdites deux extrémités qu'au centre.

3. Languette de ceinture de sécurité (7 ; 107) selon la revendication 1 ou la revendication 2, dans laquelle :
la poutre (25) et la base (23) sont formées de telle sorte que la section transversale de chacune parmi la poutre (25) et la base (23) devient plus petite aux deux extrémités qu'au centre,
la poutre (25) et la base (23) ont des bords formant le trou traversant (71),
les bords ont chacun une surface inclinée (74, 75) qui fait face à la ceinture de sécurité (4) dans un état où elle n'est pas portée dans lequel la ceinture de sécurité (4) insérée à travers le trou traversant (71) n'est pas portée par un occupant,
la surface inclinée (74, 75) est formée en étant soumise à une presse à chanfreiner ou à un chanfreinage, et
la poutre (25) est formée de telle sorte qu'une largeur de la poutre (25) dans une direction d'insertion et de retrait de la partie longitudinale (21) dans et depuis la boucle (8) devient plus petite aux deux extrémités qu'au centre, et
la base (23) est formée de telle sorte qu'une longueur de la surface inclinée (75) dans la direction d'insertion et de retrait de la partie longitudinale (21) dans et depuis la boucle (8) devient plus grande aux deux extrémités qu'au centre.

4. Languette de ceinture de sécurité (7 ; 107) selon l'une quelconque des revendications 1 à 3, comprenant :
un récepteur de butée (77) configuré pour recevoir une butée de languette (41) qui est prévue de manière à faire saillie d'une surface principale de la ceinture de sécurité (4) de telle sorte que la languette de ceinture de sécurité (7) ne puisse pas se déplacer le long de la ceinture de sécurité (4) dans un état de non-portée dans lequel la ceinture de sécurité (4) n'est pas portée par un occupant,
dans lequel le récepteur de butée (77) est prévu de manière à être encastré vers l'intérieur à partir d'une surface d'une partie d'un moule (70) qui recouvre la plaque (20), la base (23) étant noyée dans la partie,
dans laquelle la plaque (20)) présente une surface inclinée donnée (76) qui fait face au récepteur de butée (77) au centre d'un bord de la base (23), le bord formant le trou traversant (71) et le centre coïncidant avec le récepteur de butée (77), et
dans laquelle la surface inclinée donnée (76) est formée en étant soumise à une presse à chanfreiner ou à un chanfreinage.

5. Languette de ceinture de sécurité (7 ; 107) selon la revendication 4, dans laquelle :
la poutre (25) ou la base (23) présente, à un bord formant le trou traversant (71), une surface inclinée (74, 75)) qui fait face à la ceinture de sécurité (4) dans un état non-portée dans lequel la ceinture de sécurité (4) insérée à travers le trou traversant (71) n'est pas portée par un occupant, et
un angle d'inclinaison de la surface inclinée donnée (76) de la plaque (20) est plus grand qu'un angle d'inclinaison de la surface inclinée (74, 75) de la poutre (25) ou de la base (23).

6. Languette de ceinture de sécurité (7 ; 107) selon la revendication 4 ou la revendication 5, dans laquelle le centre de la base (23) ayant la surface inclinée donnée (76) est en retrait dans une direction dans laquelle le trou traversant (71) est élargi.

7. Dispositif de ceinture de sécurité (1) comprenant :
une ceinture de sécurité (4),
un enrouleur (3) qui est configuré pour permettre à la ceinture de sécurité (4) d'être rétractée dans et étendue depuis l'enrouleur (3),
un élément d'insertion de ceinture (6) à travers lequel la ceinture de sécurité (4) est insérée et qui est configuré pour guider la ceinture de sécurité (4) vers un occupant,
une boucle (8) et
une languette de ceinture de sécurité (7) ; 107) à mettre en prise de manière amovible avec la boucle (8), dans lequel la languette de ceinture de sécurité (7 ; 107) est la languette de ceinture de sécurité selon l'une quelconque des revendications 1 à 6.

8. Véhicule comprenant le dispositif de ceinture de sécurité (1) selon la revendication 7.
